# EUROPÄISCHE PATENTANMELDUNG

(11) **EP 1 375 581 A1**
(43) Veröffentlichungstag der Anmeldung: **02.01.2004**
(21) Anmeldenummer: 03013681.6
(22) Anmeldetag: 17.06.2003
(51) Int. Cl.: C08K 5/3445, C08K 5/3472, C08G 18/80, C09D 175/04

(54) **Zusammensetzung enthaltend ein blockiertes Polyisocyanat**

(30) Priorität: 27.06.2002 DE 10228730
(71) Anmelder: Bayer Aktiengesellschaft, 51368 Leverkusen (DE)
(72) Erfinder: Thiebes, Christoph, Dr., 50670 Köln (DE); Füssel, Christian, 47918 Tönisvorst (DE); Halpaap, Reinhard Dr., 51519 Odenthal (DE); Baumbach, Beate, Dr., 51399 Burscheid (DE); Petzoldt, Joachim, Dr., 40789 Monheim (DE); Danielmeier, Karsten, Dr., 42659 Solingen (DE)

(57) **Zusammenfassung**

Die vorliegende Erfindung betrifft die Verwendung einer Verbindung gemäß einer der Formeln I bis III, 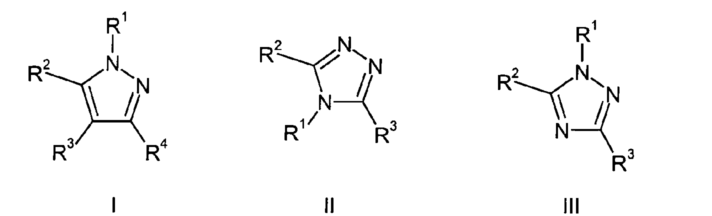 worin
R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen, wobei im Falle der Formel I R² und R³ zusammengenommen oder R³ und R⁴ zusammengenommen auch einen substituierten oder unsubstituierten (bevorzugt unsubstituierten) Benzolring bedeuten könnnen, der an den Pyrazolring ankondensiert ist, zur Stabilisierung von blockierten Polyisocyanaten gegen Thermovergilbung. Die vorliegende Erfindung betrifft weiterhin Zusammensetzungen enthaltend blockierte Polyisocyanate und mindestens eine Verbindung nach Formel I bis III, sowie Lacke enthaltend diese Zusammensetzung, sowie Beschichtungen erhätlich aus diesen Lacken und mit diesen Lacken beschichtete Substrate.

## Beschreibung

Die vorliegende Erfindung betrifft die Verwendung bestimmter Pyrazole und 1,2,4-Triazole zur Stabilisierung von blockierten Polyisocyanaten gegen Thermovergilbung. Die vorliegende Erfindung betrifft weiterhin Zusammensetzungen enthaltend blockierte Polyisocyanate und mindestens eines dieser bestimmten Pyrazole oder 1,2,4-Triazole, sowie Lacke enthaltend diese Zusammensetzung, sowie Beschichtungen erhätlich aus diesen Lacken und mit diesen Lacken beschichtete Substrate.

Blockierte Polyisocyanate werden zum Beispiel in Einkomponenten-Polyurethan-Einbrennlacken (1K-PUR-Einbrennlacken), insbesondere für Automobil-Klarlacke und für sogenannte Coil Coating-Lacke eingesetzt. Beim Coil Coating werden Rollen aus Stahlblech (sogenannte Coils) abgerollt und lackiert. Die Produkte des Coil Coatings sind lackiert Stahlbleche, die zum Beispiel für die Herstellung von Haushaltsgeräten wie Kühlschränke etc. (sogenannte weiße Ware) eingesetzt werden. Für diese Einsatzzwecke ist, insbesondere unter Überbrerinbedingungen nur eine geringfügige Thermovergilbung der Lacke zugelassen. Unter Überbrennen wird die Überschreitung der üblichien Einbrenntemperatur eines Lackes verstanden. Beim Coil Coating bedeutet Überbrennen das Überschreiten der sogenannten Peak-Metal-Temperatur. Unter Thermovergilbung wird die Vergilbung des Lackes bei hoher Temperatur verstanden. Hohe Temperaturen treten insbesondere beim Einbrennen der Lacke auf.

Liebigs Annalen, Band 562, Seiten 205 bis 229 aus dem Jahre 1949 beschreibt die Herstellung von blockierten Polyisocyanaten. Die Herstellung der blockierten Polyisocyanate kann durch direkte Umsetzung der Polyisocyanate mit dem Blockierungsmittel erfolgen. Im Falle C-H-acider Blockierungsmittel (zum Beispiel Malonsäureester) können Deprotonierungsmittel eingesetzt werden, um die Reaktion der Polyisocyanate mit dem Blockierungsmittel auszulösen.

DE-A 197 38 497 offenbart gegen Thermovergilbung stabilisierte, mit Aminen blockierte Polyisocyanate.

JP-A 10-306254 offenbart blockierte Polyisocyanate, die Benzotriazole enthalten.

Ein Beitrag zur Thermovergilbung der blockierten Polyisocyanate beim Lackieren wird dem Blockierungsmittel zugeschrieben. Als Blockierungsmittel, die zu einer geringen Thermovergilbung führen, werden in Farbe & Lack, 7/96, 102. Jahrgang, Seiten 51 bis 58, von Engbert et al. 3,5-Dimethylpyrazol und 1,2,4-Triazol beschrieben. Diese haben jedoch andere Nachteile. So ist 3,5-Dimethylpyrazol teuer und 1,2,4-Triazol aufgrund bestimmter Produkteigenschaften nicht allgemein einsetzbar. Beispielsweise führt die Blockierung von Polyisocyanaten auf Basis von 1,6-Diisocyanatohexan (HDI) mit 1,2,4-Triazol zu stark kristallisierenden Produkten, welche somit für eine Anwendung in lösemittelhaltigen Lacken und Beschichtungen ungeeignet sind.

Andere Blockierungsmittel wie z. B. Butanonoxim und Diisopropylamin haben den Nachteil, daß sie zu hoher Thermovergilbung führen.

Um die oben beschriebenen Nachteile zu verringern, offenbaren EP-A 0 654 490 und DE-A 44 16 750 blockierte Polyisocyanate, die mit Mischungen aus 1,2,4-Triazol und/oder 3,5-Dimethylpyrazol in Kombination mit weiteren Blockierungsmitteln blockiert sind. Diese weisen aber ebenfalls die oben beschriebenen Nachteile auf, wenn auch in geringerem Ausmaß.

In EP-A 0 829 500 und in DE-A 197 38 497 wird als Stabilisierungsmittel für blockierte Polyisocyanate eine Kombination von Verbindungen beschrieben, wobei eine der Verbindungen mindestens einen 2,2,6,6-Tetramethylpiperidinyl-Rest, den sog. HALS-(hindered amine light stabilizer) Rest und die andere eine Hydrazid-Struktur aufweist. Nachteilig ist jedoch, dass letztere teilweise nicht kommerziell erhältlich sind und z. B. durch Umsetzung eines cyclischen Carbonates mit Hydrazin hergestellt werden müssen, was einen zusätzlichen Arbeitsschritt notwendig macht. Zudem besitzt ein Teil dieser Verbindungen zwei isocyanatreaktive Gruppen, was zu hohen Viskositäten und damit zu erhöhtem Lösemittelanteil der Produkte führt. In Einzelfällen kommt es bei Einsatz dieser Verbindungen zu Gelierung.

Der vorliegenden Erfindung liegt die Aufgabe zu Grunde, Polyisocyanate gegen Thermovergilbung zu stabilisieren.

Diese Aufgabe wird gelöst durch die Verwendung einer Verbindung gemäß einer der Formeln I bis III, 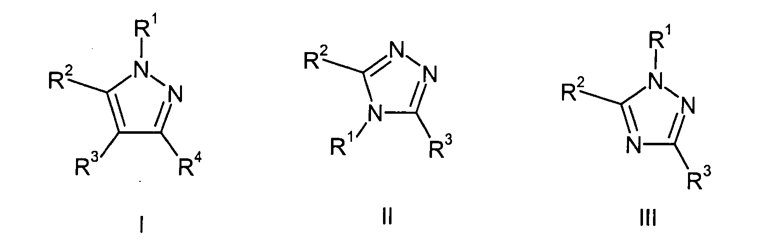 worin
R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen,
wobei
im Falle der Formel I R² und R³ zusammengenommen oder R³ und R⁴ zusammengenommen auch einen substituierten oder unsubstituierten (bevorzugt unsubstituierten) Benzolring bedeuten können, der an den Pyrazolring ankondensiert ist, zur Stabilisierung von blockierten Polyisocyanaten gegen Thermovergilbung.

Weiterhin wird diese Aufgabe gelöst durch eine Zusammensetzung enthaltend
A) mindestens ein blockiertes Polyisocyanat und
B) mindestens eine Verbindung gemäß einer der Formeln I bis III, 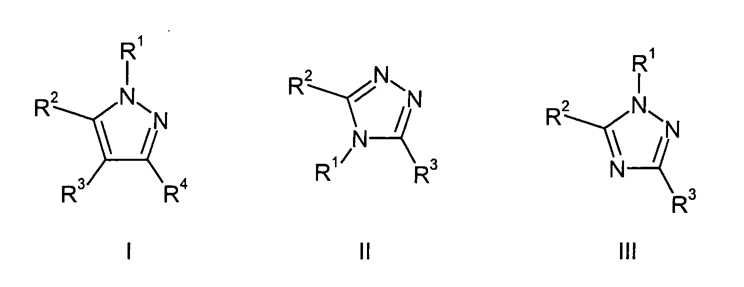 worin
   R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen,
   wobei
   im Falle der Formel I R² und R³ zusammengenommen oder R³ und R⁴ zusammengenommen auch einen substituierten oder unsubstituierten Benzolring bedeuten können, der an den Pyrazolring ankondensiert ist.

In einer Ausführungsform der vorliegenden Erfindung ist das blockierte Polyisocyanat zu mehr als 90 mol-%, bevorzugt ausschließlich, mit anderen Verbindungen blockiert ist als mit den oben unter Formel I bis III genannten.

In einer Ausführungsform der vorliegenden Erfindung liegen die Isocyanatgruppen des blockierten Polyisocyanats zu mindestens 95 mol-% in blockierter Form vor.

In einer Ausführungsform der vorliegenden Erfindung hat das blockierte Polyisocyanat einen Gehalt an unblockierten und blockierten Isocyanatgruppen in Summe von 5 bis 27 Gew.-% (berechnet als NCO, Molekulargewicht = 42).

In einer Ausführungsform der vorliegenden Erfindung hat die unter B) genannte Verbindung einen Anteil von 0,1 bis 10 Gew.-%, bezogen auf die Menge des blockierten Polyisocyanats, in der erfindungsgemäßen Zusammensetzung.

In einer Ausführungsform der vorliegenden Erfindung enthält die Zusammensetzung zusätzlich
C) weitere Hilfsmittel oder Zusatzstoffe.

In einer Ausführungsform der vorliegenden Erfindung ist der Anteil von C) in der Zusammensetzung bis zu 5 Gew.-%, bezogen auf die Menge des blockierten Polyisocyanats.

Die beschriebene Verwendung und die beschriebene Zusammensetzung sind Gegenstand der vorliegenden Erfindung.

Weiterhin ist Gegenstand der vorliegenden Erfindung ein Lack enthaltend die erfindungsgemäße Zusammensetzung.

Weiterhin ist Gegenstand der vorliegenden Erfindung eine Beschichtung erhältlich aus diesem Lack.

Weiterhin ist Gegenstand der vorliegenden Erfindung ein beschichtetes Substrat erhältlich durch Beschichten eines Substrates mit diesem Lack.

Blockierte Polyisocyanate können durch die Umsetzung von Polyisocyanaten (a1)) mit Blockierungsmitteln (a2)) und gegebenenfalls mit weiteren Verbindungen (a3)) erhalten werden, die mit Isocyanaten reagieren (sogenannte isocyanatreaktive Verbindungen).

Polyisocyanate (a1)) sind insbesondere aliphatische, cycloaliphatische, araliphatische und/oder aromatische Diisocyanate sowie beliebige, durch Modifizierung dieser Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie z. B. aus "Polyurethane für Lacke und Beschichtungen", Seiten 18 bis 35 (M. Bock, Vincentz Verlag, Hannover, 1999) bekannt sind, oder Gemische dieser Verbindungen.

Geeignete Diisocyanate sind insbesondere beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenyhlmethan, 1,5-Diisocyanatonaphthalin oder beliebige Gemische solcher Diisocyanate.

Bevorzugt handelt es sich bei den Polyisocyanaten um Polyisocyanate oder Polyisocyanatgemische der genannten Art mit ausschließlich aliphatisch und/oder cycloaliphatisch gebundenen Isocyanatgruppen.

Besonders bevorzugte Polyisocyanate sind Polyisocyanate bzw. Polyisocyanatgemische mit Isocyanuratstruktur und/oder Biuretstruktur auf Basis von HDI, IPDI und/oder 4,4'-Diisocyanatodicyclohexylmethan oder Gemische dieser Verbindungen.

Geeignete Blockierungsmittel (a2)) sind aus dem Stand der Technik bekannt, dabei handelt es sich beispielsweise um Alkohole, Lactame, Oxime, Malonester, Alkylacetoacetate, Phenole, sowie Amine, wie z.B. Butanonoxim, Diisopropylamin, Malonsäurediethylester, Acetessigester, Acetonoxim, ε-Caprolactam oder beliebige Gemische dieser Blockierungsmittel. Bevorzugt werden Butanonoxim, Malonsäurediethylester, Diisopropylamin und ε-Caprolactam oder Gemische dieser Verbindungen als Blockierungsmittel verwendet. Besonders bevorzugte Blockierungsmittel sind Butanonoxim und/oder Diisopropylamin.

Bei den isocyanatreaktiven Verbindungen (a3)) handelt es sich z.B. um Verbindungen, die eine oder mehrere isocyanatreaktive Amino- und/oder Hydroxygruppen enthalten, wie beispielsweise, Monoalkohole, Polyalkohole, Monoamine, Polyamine und Aminoalkohole oder Gemische dieser Verbindungen. Diese werden in einer sogenannten Vorverlängerungsreaktion eingesetzt, um die Gebrauchseigenschaften der erfindungsgemäßen blockierten Polyisocyanate an das jeweilige Anforderungsprofil anzupassen. So kann zum Beispiel die Vernetzungsdichte durch Erhöhung der mittleren NCO-Funktionalität im fertigen Härter gesteigert werden. Die Elastizität kann durch Komponenten beeinflußt werden, die zu größerer Härte oder Weichheit führen. Die Kristallisationsneigung kann beeinflußt werden.

Bevorzugt verwendet man 1,6-Hexandiol, 2-Ethylhexan-1,3diol, 1,3-Butandiol, 1,4-Butandiol, 2,2,4-Trimethyl- 1,3-pentandiol, 2,4,4-Trimethyl-1,3-pentandiol, Trimethylolpropan, Polyesterpolyole, Polyacrylatpolyole, Polycarbonatpolyole und/oder Polyurethanpolyole oder Gemische dieser Verbindungen.

Das Molverhältnis der Isocyanatgruppen der Komponente a1) zu der Summe der isocyanatreaktiven Gruppen der Komponenten a2) und a3) beträgt bevorzugt 0,80 bis 1,05, insbesondere bevorzugt 0,95 bis 1,00, besonders bevorzugt beträgt das Verhältnis 1,00. Falls als Komponente B) Verbindungen mit isocyanatreaktiven Gruppen zum Einsatz kommen, beträgt das Verhältnis bevorzugt 0,80 bis 1,00, insbesondere 0,95 bis 1,00, besonders bevorzugt beträgt das Verhältnis 1,00.

Der Anteil in Mol-% der isocyanatreaktiven Gruppen der Komponente a3) an der Summe der isocyanatreaktiven Gruppen der Komponenten a2) und a3) beträgt gegebenenfalls bevorzugt 1 % bis 50 %, insbesondere 3 % bis 30 %, besonders bevorzugt 4 % bis 8 %.

Die Herstellung der blockierten Polyisocyanate aus den Komponenten a1), a2) und gegebenenfalls a3) erfolgt durch Umsetzung dieser Komponenten nach den aus dem Stand der Technik bekannten Methoden. Diese werden zum Beispiel in Liebigs Annalen, Band 562, Seiten 205 bis 229 aus dem Jahre 1949 beschrieben. Die Herstellung der blockierten Polyisocyanate kann durch direkte Umsetzung der Polyisocyanate mit dem Blockierungsmittel erfolgen. Im Falle C-H-acider Blockierungsmittel (zum Beispiel Malonsäureester) können Deprotonierungsmittel eingesetzt werden, um die Reaktion der Polyisocyanate mit dem Blockierungsmittel auszulösen.

Bei der Komponente B) der erfindungsgemäßen Zusammensetzung handelt es sich um Verbindungen gemäß einer der Formeln I bis III oder beliebige Gemische dieser Verbindungen, 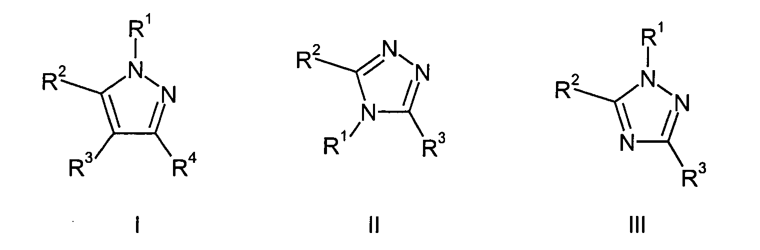 worin
R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen, wobei im Falle der Formel I R² und R³ zusammengenommen oder R³ und R⁴ zusammengenommen auch einen substituierten oder unsubstituierten (bevorzugt unsubstituierten) Benzolring bedeuten könnnen, der an den Pyrazolring ankondensiert ist.

Bevorzugt sind Verbindungen die den allgemeinen Formeln I bis III entsprechen, wobei R¹ für ein Wasserstoffatom steht und R², R³ und R⁴ unabhängig voneinander für Wasserstoff oder einen Alkylrest mit 1 bis 6 C-Atomen oder in Kombination von zwei oder drei der Reste R² bis R⁴ für ein aliphatisches Ringsystem mit 1 bis 25 C-Atomen stehen, oder beliebige Gemische dieser Verbindungen.

Besonders bevorzugt sind Verbindungen die den allgemeinen Formeln I bis III entsprechen, wobei R¹ für ein Wasserstoffatom steht und R², R³ und R⁴ unabhängig voneinander für Wasserstoff oder einen Alkylrest mit 1 bis 6 C-Atomen stehen, oder beliebige Gemische dieser Verbindungen.

Besonders bevorzugt handelt es sich bei den Verbindungen um 3,5-Dimethylpyrazol, 3,5-Dimethyl-1,2,4-Triazol und 1,2,4-Triazol oder beliebige Gemische dieser Verbindungen.

Die Verbindungen gemäß einer der Formeln I bis III (Komponente B der erfindungsgemäßen Zusammensetzung) sind kommerziell erhältlich oder lassen sich nach bekannten Verfahren herstellen. Die entsprechenden Herstellverfahren sind dem Fachmann bekannt. Es können die üblichen Verfahren der Heterocyclen-Synthese eingesetzt werden. Zum Beispiel können Hydrazine mit Dicarbonylverbindungen kondensiert werden.

Von B) verschiedene Hilfsmittel und Zusatzstoffe C), die gegebenenfalls mitverwendet werden können, sind z.B. Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten HALS-Verbindungen wie Tinuvin® 292 (Ciba Spezialitäten GmbH, Lamperitheim DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Die Herstellung der erfindungsgemäßen Zusammensetzung kann durch Vermischung der Komponenten A), B) und gegebenenfalls C) in beliebiger Reihenfolge geschehen, wobei jede der Komponenten in in Lösemitteln gelöster Form vorliegen kann und zusätzlich weitere Lösemittel zugegeben werden können. Die Vermischung kann in einem Temperaturbereich von 0 bis 100°C, bevorzugt in einem Temperaturbereich von 20 bis 80°C, besonders bevorzugt in einem Temperaturbereich von 20 bis 50°C erfolgen.

Weiterhin kann eine besonders bevorzugte Ausführungsform des oben beschriebenen Verfahrens zur Herstellung der erfindungsgemäßen Polyisocyanate dadurch gekennzeichnet sein, dass die Komponente B) während und/oder unmittelbar im Anschluß an die Herstellung der Komponente A) mit dieser vermischt wird. Werden als Komponente B) Verbindungen eingesetzt, die isocyanatreaktive Gruppen enthalten, so werden diese erst dann zugesetzt, wenn die NCO-Gruppen von a1) und die isocyanatreaktiven Gruppe der Komponenten a2) und a3) zu ≥99 % umgesetzt sind. Gegebenenfalls können während und/oder im Anschluß an die Herstellung der Komponente A) weitere Hilfs- und Zusatzmittel C) zugegeben werden. Die Komponenten a1), a2) und a3) können bei der Herstellung der Komponente A) jeweils in in Lösemitteln gelöster Form vorliegen, zusätzlich können Lösemittel zugegeben werden. Die Umsetzung der Komponenten a1), a2), a3) kann in einem Temperaturbereich von 0 bis 200°C, bevorzugt in einem Temperaturbereich von 20 bis 130°C, besonders bevorzugt von 20 bis 90°C durchgeführt werden. Die Blockierungsreaktion und auch die Vorverlängerungsreaktion können durch die Verwendung von Katalysatoren, die in der Polyurethanchemie bekannt sind, beschleunigt werden. Dies kann beispielsweise dann vorteilhaft sein, wenn die Komponenten a2 und/oder a3 Hydroxylgruppen enthalten.

Als Lösemittel geeignet sind die an sich üblichen Lacklösemittel, wie z.B. Ethylacetat, Butylacetat, 1 -Methoxypropyl-2-acetat, 3-Methoxy-n-butylacetat, Aceton, 2-Butanon, 4-Methyl-2-pentanon, Cyclo-hexanon, Toluol, Xylol, N-Methylpyrrolidon, Chlorbenzol oder Testbenzin. Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind, sind ebenfalls geeignet. Allerdings können auch Alkohole, wie beispielsweise Isobutanol verwendet werden, sobald die NCO-Gruppen der Komponente a1) vollständig mit den isocyanatreaktiven Gruppen der Komponenten a2) und a3) abreagiert sind. Bevorzugte Lösemittel sind Aceton, Butylacetat, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind.

Bei den erfindungsgemäßen blockierten Polyisocyanaten handelt es sich um solche, deren Isocyanatgruppen bevorzugt zu mindestens 95 %, insbesondere bevorzugt zu mindestens 98 %, besonders bevorzugt zu mindestens 99,5 % in blockierter Form vorliegen, mit einem Gehalt (berechnet als NCO) an unblockierten und blockierten Isocyanatgruppen von 5-27 Gew.-%, bevorzugt 5-22 Gew.-%, ganz besonders bevorzugt 7-19 Gew.-%.

Die erfindungsgemäßen blockierten Polyisocyanate enthalten bevorzugt 0,1 bis 10 Gew.-%, insbesondere bevorzugt 0,5-7 Gew.-%, besonders bevorzugt 1-4 Gew.-% der Komponente B), bevorzugt in chemisch nicht gebundener Form, sowie bis zu 5 Gew.-% der Komponente C, wobei sich die Gehalte der Komponenten A), B), C) bevorzugt zu 100 Gew.-% addieren.

Komponente B) liegt hierbei bevorzugt in chemisch nicht gebundener Form vor und füngiert bevorzugt als stabilisierendes Additiv. Die erfmdungsgemäßen Polyisocyanate, bei denen als Komponente B) Verbindungen mit isocyanatreaktiven Gruppen verwendet werden, unterscheiden sich damit von den aus EP-A 0 654 490 und DE-A 44 16 750 bekannten mit Fünfring-Heteroaromaten mischblockierten Systemen.

Die vorliegende Erfindung beruht auf der überraschenden Beobachtung, dass blockierte Polyisocyanate nach Zusatz spezieller Verbindungen aus der Gruppe der substituierten und unsubstituierten Fünfring-Heteroaromaten mit zwei oder drei Stickstoffatomen im Ringgerüst, in 1K-Lackanwendungen deutlich geringere Thermovergilbung zeigen, als vergleichbare blockierte Polyisocyanate ohne diesen Zusatz.

Die erfmdungsgemäßen Zusammensetzungen können als Bestandteil in Lacken verwendet werden. Insbesondere können Sie als Vernetzer für organische Polyhydroxylverbindungen in Polyurethan-Einkomponenten-Einbrennlacken (Polyurethan-1K-Einbrennlacken), insbesondere für Automobil-Klarlacke oder Coil Coating, verwendet werden.

Diese Lacke können bekannte und übliche weitere Bestandteile, Lösungsmittel und sonstige Hilfsstoffe und Zusatzstoffe enthalten.

Diese Lacke können zur Beschichtung verschiedener Substrate verwendet werden, insbesondere zur Beschichtung von Metallen, insbesondere von Stahl. Die Metalle können bereits mit anderen Lackschichten beschichtet sein, so daß durch die Beschichtung mit dem Lack, der die erfindungsgemäße Zusammensetzung enthält, eine weitere Lackschicht aufgebracht wird.

Die mit den erfindungsgemäßen Polyisocyanaten erreichten Vorteile bestehen in einer deutlichen Verbesserung der Vergilbungsresistenz beim Überbrennen (z.B. Überschreiten der normalen Peak Metal Temperature von 232 °C beim Coil Coating oder 140°C beim Einbrennen von Automobil-Klarlacken) und beim Wärmetempern (z. B. einer Lagerung für 120 h bei 120°C, wie sie für "weiße Ware" gefordert wird).

Daher kann man für die Herstellung der erfindungsgemäßen blockierten Polyisocyanate einfach zugängliche Blockierungsmittel, wie z.B. Malonester, Diisopropylamin und Butanonoxim verwenden, und vergleichbar geringe Thermovergilbungen erzielen, wie sie sonst nur mit kostenintensiven oder nicht allgemein einsetzbaren Blockierungsmitteln, wie z. B. 3,5-Dimethylpyrazol und 1,2,4-Triazol erreichbar sind.

Ein weiterer Vorteil der erfindungsgemäßen Polyisocyanate sowohl gegenüber den vollständig mit 3,5-Dimethylpyrazol und 1,2,4-Triazol blockierten Polyisocyanaten als auch gegenüber den in DE-A 198 56 968 und DE-A 044 16 750 beschriebenen mischblockierten Polyisocyanaten besteht darin, dass man Blockierungsmittel wie beispielsweise Diisopropylamin oder Malonsäurediethylester einsetzen kann, deren Deblockierungstemperatur im Vergleich zu den vergilbungsstabileren Blockierungsmitteln, wie 1,2,4-Triazol und 3,5-Dimethylpyrazol niedriger ist, ohne schlechtere Vergilbungsstabilität in Kauf nehmen zu müssen, was wirtschaftliche Vorteile haben oder zu besseren Filmeigenschaften, z. B. unter Unterbrennbedingungen führen kann.

Gegenüber den in EP-A 0 829 500 und DE-A 197 38 497 beschriebenen Polyisocyanaten besteht der Vorteil der verbesserten Vergilbungsstabilität, niedrigeren Viskosität und/oder der besseren Zugänglichkeit der stabilisierend wirksamen Verbindungen.

### Beispiele

In den nachfolgenden Beispielen sind alle Prozentangaben Gew.-%, außer es ist etwas anderes angegeben.

Bei den angegebenen Festkörpergehalten der Produkte handelt es sich um errechnete Werte, die dem Anteil der Komponenten entspricht, die nicht als Lösungsmittel eingesetzt werden.

### Beispiel 1 (Vergleich, ohne Mitverwendung von Fünfring-Heteroaromaten B)

Es wurde gemäß DE-A 197 38 497, Beispiel 1 ein nicht stabilisiertes, mit Diisopropylamin blockiertes Polyisocyanat auf Basis einer Mischung isocyanurathaltiger Lackpolyisocyanate von HDI und IPDI hergestellt. Der Gehalt an blockierten NCO-Gruppen betrug 8,5 %. Der Festkörpergehalt berechnete sich zu 65 %.

| Ansatz | |
|---|---|
| 140,0 g (0,7 Val) | HDI-Trimerisat, NCO-Gehalt ca. 21 %, Gehalt an monomerem 1,6-Diisocyanatohexan ca. 0,2 %, Viskosität bei 23°C ca. 3000 mPas |
| 105,0g (0,3 Val) | IPDI-Trimerisat, NCO-Gehalt ca. 12 %, 70 %ige Lösung in Solventnaphtha |
| 106,0 g (1,05 Val) | Diisopropylamin |
| 70,0 g | Methoxypropylacetat |
| 70,5 g | Isobutanol |
| 491,5 g (1,0 Val) | blockiertes Polyisocyanat, |
| | Festkörper 65 % (berchnet) |
| | blockiertes NCO-Gehalt: 8,5 % (berechnet) |

### Durchführung:

Die beiden Lackpolyisocyanate wurden mit Methoxypropylacetat vorgelegt und auf 50°C erwärmt. Unter Rühren gab man hierzu portionsweise Diisopropylamin, wobei eine leichte Exothermie beobachtet wurde. Nach beendeter Zugabe wurde 30 min bei 70°C nachgerührt. Mittels IR-Spektroskopie konnte man hierbei das Verschwinden der NCO-Gruppen überprüfen. Sobald keine NCO-Gruppen IR-spektroskopisch mehr nachweisbar waren, wurde mit Isobutanol verdünnt und man ließ erkalten.

Die Viskosität des Produktes betrug nach Verdünnung mit 1-Methoxypropyl-2-acetat auf einen Festkörpergehalt von 60 % 1500 mPas bei 23°C.

### Beispiel 2 (Vergleich, Stabilisierung durch Kombination von Hydrazid und HALS-Verbindung)

Es wurde gemäß DE-A 197 38 497, Beispiel 2 ein mit einem Hydrazid sowie einer HALS-Verbindung stabilisiertes, mit Diisopropylamin blockiertes Polyisocyanat auf Basis einer Mischung isocyanurathaltiger Lackpolyisocyanate von HDI und IPDI hergestellt. Der Gehalt an blockierten NCO-Gruppen betrug 8,5 %. Der Festkörpergehalt berechnete sich zu 65 %. Die Viskosität betrug 1300 mPas bei 23°C. Die Viskosität betrug nach Verdünnung mit 1-Methoxypropyl-2-acetat auf einen Festkörpergehalt von 60 % 4000 mPas bei 23°C.

### Beispiel 3 (erfindungsgemäß)

Es wurde gemäß DE-A 197 38 497, Beispiel 1 ein unstabilisiertes, mit Diisopropylamin blockiertes Polyisocyanat auf Basis einer Mischung isocyanurathaltiger Lackpolyisocyanate von HDI und IPDI hergestellt und mit 3 %, bezogen auf den Festkörpergehalt, 1,2,4-Triazol als Ausgangsverbindung B) der Formel 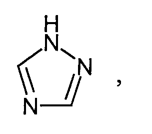 gelöst in 1-Methoxypropyl-2-acetat, versetzt. Der Gehalt an blockierten NCO-Gruppen betrug 7,6 %. Der Festkörpergehalt berechnete sich zu 60 %. Die Viskosität betrug 1300 mPas bei 23°C.

### Beispiel 4 (erfindungsgemäß)

Es wurde gemäß DE-A 197 38 497, Beispiel 1 ein nicht stabilisiertes, mit Diisopropylamin blockiertes Polyisocyanat auf Basis einer Mischung isocyanurathaltiger Lackpolyisocyanate von HDI und IPDI hergestellt und mit 3 %, bezogen auf den Festkörpergehalt, 3,5-Dimethylpyrazol (Ausgangsverbindung B)) der Formel 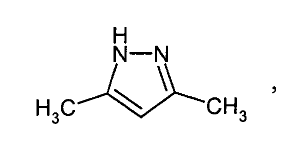 gelöst in 1-Methoxypropyl-2-acetat, versetzt. Der Gehalt an blockierten NCO-Gruppen betrug 7,6 %. Der Festkörpergehalt berechnete sich zu 60 %. Die Viskosität betrug 1300 mPas bei 23 °C.

Aus dem Vergleich der erfindungsgemäßen Beispiele und der Vergleichsbeispiele wird deutlich, dass die Stabilisierung mit der in DE-A 197 38 497, Beispiel 2 beschriebenen Kombination von Stabilisierungsmitteln im Vergleich zu dem unstabilisierten Polyisocyanat aus Beispiel 1 zu einem deutlichen Anstieg der Viskosität führt, während dies bei den erfindungsgemäßen Polyisocyanaten aus den Beispielen 3 und 4 nicht der Fall ist.

### Beispiel 5 (Verwendung im Coil-Coating, erfindungsgemäß und Vergleich)

Basierend auf dem Polyisocyanat aus dem Beispiel 1 und dem hydroxyfunktionellen Polyesterpolyol Alkynol® 1665 der Firma Bayer AG, Leverkusen, Deutschland wurde ein praxisnaher Coil-Coating-Lack hergestellt. Weiterhin wurden das Titandioxid Tronox® R-KB-4 der Firma Kerr-McGee, Krefeld-Uerdingen, Deutschland sowie als weitere Additive Celluloseacetobutyrat CAB 531-1 der Firma Krahn Chemie GmbH, Hamburg, Deutschland Dibutylzinndilaurat der Firma Brenntag, Mühlheim/Ruhr, Deutschland, ein Verlaufshilfsmittel auf der Basis eines n-Butylacrylat-Polymers (Acronal® 4 F der Firma BASF AG, Ludwigshafen, Deutschland), sowie als Lösemittel ein Gemisch hochsiedender aromatischer Kohlenwasserstoffe (Solvesso® 200 S der Firma Deutsche Exxon, Köln, Deutschland) verwendet.

Die Lacke wurden so hergestellt, dass das Molverhältnis von Hydroxylgruppen des Polyesters zu den blockierten NCO-Gruppen des Polyisocyanates 1:1, das Gewichtsverhältnis der nichtflüchtigen Bestandteile des Polyisocyanates und des Polyesters zum Pigment 1:1 betrug. Die Lacke enthielten, bezogen auf den Festkörpergehalt des Polyisocyanates und des Polyesters 0,3 Gew.-% Dibutylzinndilaurat, 1,2 Gew.-% CAB 531-1 und 0,3% Acronal® 4 F. Die Applikationsviskosität wurde auf einen Wert von ca. 100 s (DIN EN ISO 2431, Becher mit 5 mm Düse / 23°C) durch Verdünnung mit Solvesso® 200 S eingestellt.

Lack 1 wurde basierend auf dem Polyisocyanat aus Beispiel 1 hergestellt (Vergleich).
Lack 2 wurde basierend auf dem Polyisocyanat aus Beispiel 2 hergestellt. (Vergleich).
Lack 3 wurde basierend auf dem Polyisocyanat aus Beispiel 3 hergestellt. (erfindungsgemäß).
Lack 4 wurde basierend auf dem Polyisocyanat aus Beispiel 4 hergestellt. (erfindungsgemäß).

Die Lacke wurden auf ein chromatiertes Aluminumblech appliziert und entweder bei Peak-Metal-Temperaturen (PMT) von 232 °C (Einbrennvorgang) oder 254°C (Überbrennvorgang) eingebrannt. Die Schichtdicke der Filme betrug zwischen 20 und 22 µm.

An den so beschichteten Aluminiumblechen wurde der Weißgrad nach Berger ermittelt. Der Weißgrad nach Berger kann nach der CIELAB-Methode von 1976 (DIN 6174) ermittelt werden. Aus den gemessenen Werten für L, a und b ergeben sich Rₓ, R_{y} und R_{z}. Für den Weißgrad nach Berger gilt: W = R_{y} + 3 (R_{z} - Rₓ).

Die Ergebnisse sind in folgender Tabelle zusammengefaßt:

| | Vergleich | Vergleich | erfindungsgemäß | erfindungsgemäß |
|---|---|---|---|---|
| Lack | 1 | 2 | 3 | 4 |
| Weißgrad n. Berger 232 °C | 93,7 | 93,4 | 93,4 | 93,8 |
| Weißgrad n. Berger 254 °C | 93,0 | 92,8 | 94,4 | 93,3 |
| Δ Weißgrad | 0,7 | 0,6 | -1,0 | 0,5 |

Es wird deutlich, dass die beiden erfindungsgemäßen Polyisocyanate gegenüber dem in DE-A 197 38 497, Beispiel 2 beschriebenen Polyisocyanat des Standes der Technik und dem nicht stabilisierten Polyisocyanat aus Beispiel 1 zu Lacken mit zum Teil deutlich geringerer Thermovergilbung (Δ Weißgrad) beim Überbrennvorgang führen.

Man lagerte die bei einer PMT von 232 °C eingebrannten Bleche für 120 h bei 120°C und bestimmte die Differenz des Weißgrades nach Berger vor und nach der Lagerung. Wie sich aus folgender Tabelle ergibt, sinkt der Weißgrad durch die Temperung bei den erfindungsgemäßen Lacken deutlich weniger als bei dem nicht stabilisierten Lack.

| | Vergleich | erfindungsgemäß | erfindungsgemäß |
|---|---|---|---|
| Lack | 1 | 3 | 4 |
| Δ Weißgrad | 2,3 | 2,0 | 1,4 |

### Beispiel 6 (Verwendung im Automobil-Klarlack, erfindungsgemäß und Vergleich)

Basierend auf den Polyisocyanaten aus den Beispielen 1, 3 und 4 und dem hydroxyfunktionellen Polyacrylatpolyol Desmophen® A 870 der Firma Bayer AG, Leverkusen, Deutschland wurden Automobil-Klarlacke hergestellt. Dies geschah durch Vermischen des Polyacrylatpolyols und der entsprechenden Polyisocyanate im Verhältnis Ihrer Äquivalentgewichte (NCO:OH = 1). Die Applikationsviskosität wurde auf einen Wert von ca. 25 bis 30 s (DIN EN ISO 2431, Becher mit 5 mm Düse / 23°C) durch Verdünnung mit 1-Methoxypropyl-2-acetat eingestellt. Die Lacke enthielten, bezogen auf den Anteil der nicht flüchtigen Bestandteile des Polyisocyanates und des Polyesters 1,0 Gew.-% Dibutylzinndilaurat.

Lack 1 wurde basierend auf dem Polyisocyanat aus Beispiel 1 hergestellt. (Vergleich)
Lack 2 wurde basierend auf dem Polyisocyanat aus Beispiel 3 hergestellt. (erfindungsgemäß)
Lack 3 wurde basierend auf dem Polyisocyanat aus Beispiel 4 hergestellt. (erfindungsgemäß)

Die Lacke wurden auf mit einem bei Raumtemperatur getrocknetem, lösemittelhaltigem, handelsüblichen weißem Basislack, z. B. der Firma Spiess/Hecker, Köln, Deutschland präparierte Aluminiumbleche appliziert und 30 Minuten bei 140°C (Einbrennvorgang) eingebrannt. Die Schichtdicke der Filme betrug zwischen 30 und 40 µm. Anschließend wurden die Bleche noch einmal 30 Minuten bei 160°C (Überbrennvorgang) eingebrannt und die Differenz der Vergilbungswerte nach Einbrennvorgang und Überbrennvorgang (Gesamt-Δb) gemessen. Der Wert von Gesamt-Δb kann nach CIELAB ermittelt werden (CIELAB-Methode von 1976 nach DIN 6174; b wird direkt nach dieser Methode bestimmt).

Die Ergebnisse sind in folgender Tabelle zusammengefaßt:

| Lack | 1 | 2 | 3 |
|---|---|---|---|
| | Vergleich | erfindungsgemäß | erfindungsgemäß |
| Thermovergilbung beim Überbrennvorgang (Gesamt-Δb) | 2,3 | 1,3 | 0,9 |

Es wird deutlich, dass die beiden erfindungsgemäßen Polyisocyanate gegenüber dem nicht stabilisierten Polyisocyanat aus Beispiel 1 zu Lacken mit deutlich geringerer Thermovergilbung beim Überbrennvorgang (Gesamt-Δb) führen.

## Patentansprüche

1. Verwendung einer Verbindung gemäß einer der Formeln I bis III, 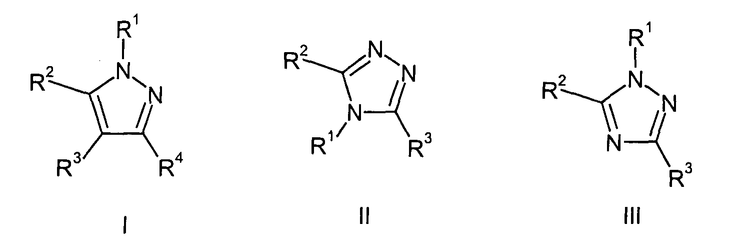 worin
R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen,
wobei
im Falle der Formel I R² und R³ zusammengenommen oder R³ und R⁴ zusammengenommen auch einen substituierten oder unsubstituierten Benzolring bedeuten können, der an den Pyrazolring ankondensiert ist,
zur Stabilisierung von blockierten Polyisocyanaten gegen Thermovergilbung.

2. Eine Zusammensetzung enthaltend
A) mindestens ein blockiertes Polyisocyanat und
B) mindestens eine Verbindung gemäß einer der Formeln I bis III, 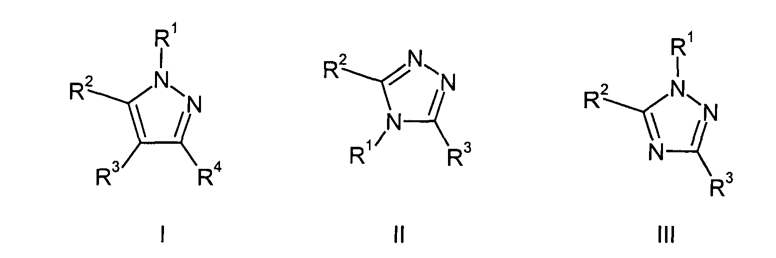
worin
R¹ bis R⁴ unabhängig voneinander für Wasserstoff oder für einen Alklylrest mit 1 bis 25 C-Atomen oder in Kombination von zwei oder drei oder vier der Reste R¹ bis R⁴ für ein aliphatisches Ringsystem mit 1 bis 25 C-Atomen stehen,
wobei
im Falle der Formel I R² und R³ zusammengenommen oder R³ und R⁴ zusammengenommen auch einen substituierten oder unsubstituierten Benzolring bedeuten können, der an den Pyrazolring ankondensiert ist.

3. Die Zusammensetzung nach Anspruch 2, wobei das blockierte Polyisocyanat ausschließlich mit anderen Verbindungen blockiert ist als mit den in Anspruch 2 unter B) genannten.

4. Die Zusammensetzung nach einem der Ansprüche 2 bis 3, wobei die Isocyanatgruppen des blockierten Polyisocyanats zu mindestens 95 mol-% in blockierter Form vorliegen.

5. Die Zusammensetzung nach einem der Ansprüche 2 bis 4, wobei das blockierte Polyisocyanat einen Gehalt an unblockierten und blockierten Isocyanatgruppen in Summe von 5 bis 27 Gew.-% (berechnet als NCO, Molekulargewicht = 42) hat.

6. Die Zusammensetzung nach einem der Ansprüche 2 bis 5, wobei die unter B) genannte Verbindung einen Anteil von 0,1 bis 10 Gew.-%, bezogen auf die Menge des blockierten Polyisocyanats, hat.

7. Die Zusammensetzung nach einem der Ansprüche 2 bis 6, enthaltend zusätzlich C) weitere Hilfsmittel oder Zusatzstoffe.

8. Die Zusammensetzung nach Anspruch 7, wobei der Anteil von C) in der Zusammensetzung bis zu 5 Gew.-%, bezogen auf die Menge des blockierten Polyisocyanats, ist.

9. Ein Lack enthaltend die Zusammensetzung nach einem der Ansprüche 2 bis 8.

10. Eine Beschichtung erhältlich aus dem Lack nach Anspruch 9.

11. Ein beschichtetes Substrat erhältlich durch Beschichten eines Substrates mit dem Lack nach Anspruch 9.
